# EUROPÄISCHE PATENTSCHRIFT

(11) **EP 4 465 815 B1**
(45) Veröffentlichungstag und Bekanntmachung des Hinweises auf die Patenterteilung: **22.01.2025**
(21) Anmeldenummer: 24708971.7
(22) Anmeldetag: 05.02.2024
(51) Int. Cl.: A01M 21/04

(54) **UNKRAUTBEKÄMPFUNGSMODUL SOWIE VORRICHTUNG UND VERFAHREN ZUR LASERBASIERTEN UNKRAUTBEKÄMPFUNG**
WEED CONTROL MODULE, DEVICE AND METHOD FOR LASER-BASED WEED CONTROL
MODULE DE LUTTE CONTRE LES MAUVAISES HERBES AINSI QUE DISPOSITIF ET PROCÉDÉ DE LUTTE CONTRE LES MAUVAISES HERBES PAR LASER

(30) Priorität: 10.02.2023 DE 102023103252; 13.04.2023 DE 202023101842 U
(43) Veröffentlichungstag der Anmeldung: 27.11.2024
(73) Patentinhaber: Escarda Technologies GmbH, 12681 Berlin (DE)
(72) Erfinder: ALLGEUER, Philipp, 12681 Berlin (DE); GAUS, Viktor, 12681 Berlin (DE); KUTTY, Ragith Ayyappan, 12681 Berlin (DE); MUHRA, Eike Christian, 12681 Berlin (DE); PASTRANA PEREZ, Julio Cesar, 12681 Berlin (DE)
(74) Vertreter: Werner, André
(86) Internationale Anmeldenummer: PCT/DE2024/150002
(87) Internationale Veröffentlichungsnummer: WO 2024/165111

(56) Entgegenhaltungen:
- JP-B2- 5 188 957
- US-A1- 2022 117 218
- US-A1- 2022 361 475
- US-B2- 9 658 201

## Beschreibung

Die Erfindung betrifft ein laserbasiertes Unkrautbekämpfungsmodul sowie eine Vorrichtung und ein Verfahren zur laserbasierten Bekämpfung von Unkrautpflanzen auf einer zum landwirtschaftlichen Anbau von Nutzpflanzen dienenden Agrarfläche. Die vorgeschlagene Technologie ermöglicht es, Unkraut auf landwirtschaftlichen Anbauflächen umweltschonend und chemikalienfrei zu bekämpfen.

Die Verfahren zur laserbasierten Unkrautbekämpfung beruhen grundsätzlich darauf, dass Unkrautpflanzen auf Agrarflächen durch gezielte Bestrahlung mittels eines energiereichen Laserstrahls ausgemerzt werden. Der Beschuss durch die Laserstrahlung führt zu einer thermischen Zersetzung der Pflanzensubstanz und in der Folge zu deren biologischer Beseitigung. Beschrieben ist ein solches Unkrautbekämpfungsverfahren beispielsweise in WO 00/03589 A1.

Um Unkraut durch zielgerichteten Laserbeschuss bekämpfen zu können, ist es verfahrensgemäß zunächst erforderlich, das Unkraut zwischen den auf den Agrarflächen angebauten Nutzpflanzen zu erkennen. Dies erfolgt regelmäßig durch eine Bilderfassungs- sowie eine Bildverarbeitungsvorrichtung, mittels denen ein Teilstück der Agrarfläche fotografisch erfasst und das erfasste Bild auf charakteristische Pflanzenmerkmale analysiert wird. Die erkannten Pflanzen werden so in Nutz- und Unkrautpflanzen unterschieden. Im weiteren Schritt wird dann die erkannte Unkrautpflanze mittels einer Lasereinheit, die in ihrer Laseroptik entsprechende Ablenk- und Fokussiereinheiten beinhaltet, anvisiert und die Bestrahlung bzw. der Beschuss der Unkrautpflanze mit einem energiereichen Laserstrahl ausgelöst. Die als Nutzpflanzen erkannten Pflanzen bzw. nicht als Unkraut erkannte Objekte werden von der Laserbestrahlung ausgespart.

Aufgrund der benötigten Leistungsdichte werden für die laserbasierte Unkrautbekämpfung in der Praxis derzeit bevorzugt Lasersysteme auf Basis von Kohlendioxidlasern eingesetzt. Diese sind jedoch vergleichsweise ineffizient, erfordern großen Bauraum und benötigen eine aufwendige Sicherheitsarchitektur. Die aufgrund dieser Randbedingungen zudem meist schweren Geräte führen bei landwirtschaftlicher Nutzung zu mechanischen Bodenbelastungen, die vor allem während der Wachstumsphase der Nutzpflanzen, in der zweckmäßigerweise auch die Unkrautbekämpfung stattfindet, möglichst zu vermeiden sind. Im Unterschied zu schweren landwirtschaftlichen Erntegeräten sollten Vorrichtungen zur Unkrautbekämpfung insofern möglichst wenig bodenbelastend ausgeführt sein. Dies ist bei Verwendung von Kohlendioxidlasern zur Unkrautbekämpfung allerdings nur bedingt realisierbar.

Zur Vermeidung der Nachteile von Kohlendioxidlasern können alternative Lasertypen, wie zum Beispiel Halbleiterlaser, für die laserbasierte Unkrautvernichtung zum Einsatz kommen. Die Vorteile der Halbleiterlaser gegenüber Kohlendioxidlasern bestehen insbesondere im geringeren gerättechnischen Aufwand, in der Möglichkeit der Strahlführung durch flexible Lichtleiter und im besseren Wirkungsgrad. Beschrieben sind Vorrichtungen und Verfahren zur laserbasierten Unkrautbekämpfung mit Halbleiterlasern beispielsweise in EP 2 848 120 A1 oder US 2022/0117218 A1. Jedoch bestehen auch innerhalb der halbleiterbasierten Lasersysteme große Unterschiede in Bezug auf Effektivität, Effizienz, Robustheit und Zuverlässigkeit.

Aufgabe der Erfindung ist es, eine kompakte und robuste halbleiterlaserbasierte Unkrautbekämpfungsvorrichtung sowie ein Verfahren zu deren Betrieb bereitzustellen, die bei landwirtschaftlicher Nutzung mit hoher Effektivität und gleichzeitig hoher Effizienz eine gezielte Unkrautbekämpfung ermöglichen.

Diese Aufgabe wird durch ein Unkrautbekämpfungsmodul mit den Merkmalen nach Anspruch 1, eine Vorrichtung zur laserbasierten Unkrautbekämpfung nach Anspruch 6 sowie ein Verfahren zur laserbasierten Unkrautbekämpfung nach Anspruch 11 gelöst. Zweckmäßige Weiterbildungen der Erfindung sind in den Ansprüchen 2 bis 5, 7 bis 10 sowie 12 aufgeführt.

Nach Maßgabe der Erfindung weist das Unkrautbekämpfungsmodul zur selektiven Bekämpfung von Unkrautpflanzen auf einer zum landwirtschaftlichen Anbau von Nutzpflanzen dienenden Agrarfläche eine Bilderkennungseinheit, eine Lasereinheit sowie eine Datenverarbeitungs- und Steuerungseinheit auf, wobei die Lasereinheit ihrerseits eine Laserdiodeneinheit zur Erzeugung eines Laserstrahls sowie eine über einen Lichtleiter mit der Laserdiodeneinheit gekoppelte Laseroptik zur Strahlablenkung und Strahlfokussierung des Laserstrahls umfasst. Die Laseroptik beinhaltet unter anderem Ablenkeinheiten, wie zum Beispiel bewegliche Spiegel, sowie Fokussiereinheiten, wie zum Beispiel Linsen- und Spiegelanordnungen. Das Unkrautbekämpfungsmodul umfasst ferner ein Gehäuse, das die Bilderkennungseinheit, die Lasereinheit sowie die Datenverarbeitungs- und Steuerungseinheit aufnimmt und umschließt.

Die Bilderkennungseinheit weist eine Stereokamera auf bzw. ist als solche ausgebildet. Die Stereokamera ist so im Gehäuse angeordnet, dass ihre optische Achse bzw. ihr Blickfeld bei bestimmungsgemäßem Betrieb auf die Agrarfläche ausgerichtet ist. Die Stereokamera ist eingerichtet, Bilder in einem vorgegebenen Bilderfassungsbereich auf und über der Agrarfläche fotografisch aufzunehmen und zu dreidimensionale Bilddaten zu verarbeiten. D. h., die Bilddaten liegen als Bildpunkte mit dreidimensionaler Koordinatenzuordnung vor. Die Bilderfassungsrate der Stereokamera liegt im Regelfall im Bereich von 60 Hz bis 90 Hz. Die Stereokamera erfasst bevorzugt Licht im sichtbaren Spektralbereich, kann aber ebenfalls dazu ausgebildet sein, andere oder weitere Spektralbereiche zu erfassen, zum Beispiel infrarotes oder ultraviolettes Licht.

Die Stereokamera und die Laseroptik sind vorzugsweise an der Gehäusebodenseite des Gehäuses angeordnet, sodass sowohl das Blickfeld der Stereokamera als auch das Blickfeld der Laseroptik den der Gehäusebodenseite gegenüberliegenden Bereich, d. h. bei bestimmungsgemäßer Aufstellung eine Teilfläche der Agrarfläche, erfasst. Diese durch den Bilderfassungsbereich definierte Teilfläche der Agrarfläche wird auch als Arbeitsfläche bezeichnet.

Erfindungsgemäß ist die Datenverarbeitungs- und Steuerungseinheit eingerichtet, anhand der mit der Stereokamera bereitgestellten dreidimensionalen Bilddaten mittels einer in der Datenverarbeitungs- und Steuerungseinheit integrierten, anhand von Unkraut- und Nutzpflanzenbilddaten trainierten künstlichen Intelligenz die Unkrautpflanzen zu erkennen und von den Nutzpflanzen und anderen Objekten im Bilderfassungsbereich zu unterscheiden. Die Datenverarbeitungs- und Steuerungseinheit ist zudem dazu eingerichtet, mittels der in der Datenverarbeitungs- und Steuerungseinheit integrierten, trainierten künstlichen Intelligenz bei jeder erkannten Unkrautpflanze mindestens einen überlebenswichtigen Pflanzenbereich zu identifizieren und dessen Positionsdaten zu bestimmen. Solche zu identifizierenden, überlebenswichtigen Pflanzenbereiche sind beispielsweise die bodennahen Verzweigungsstellen der Pflanzentriebe im Übergangsbereich zur Wurzel. Bei keimenden Unkrautpflanzen ist dieser Bereich, an dem sich die Keimblätter verzweigen, durch Meristeme oder Bildungsgewebe verbunden, welches ein besonders empfindlicher und überlebenswichtiger Bereich der Unkrautpflanze ist.

Ferner ist die Datenverarbeitungs- und Steuerungseinheit dazu ausgebildet, den identifizierten überlebenswichtigen Pflanzenbereich jeder erkannten Unkrautpflanze mittels der Laseroptik anzuvisieren, wobei die Ansteuerung der Laseroptik auf Basis der Positionsdaten des identifizierten überlebenswichtigen Pflanzenbereichs erfolgt, und schließlich - nach Abschluss des Anvisierens des überlebenswichtigen Pflanzenbereichs jeder erkannten Unkrautpflanze - den Laserstrahl für eine vorgegebene Bestrahlungsdauer zur Bekämpfung der jeweiligen Unkrautpflanze auszulösen.

Die Laserdiodeneinheit beinhaltet mindestens eine Laserdiode (auch Halbleiterlaser bezeichnet), die das Laserlicht bzw. den Laserstrahl generiert. Der mittels der Laserdiodeneinheit erzeugte hochenergetische Laserstrahl weist erfindungsgemäß eine Lichtwellenlänge im Bereich von 955 nm bis 995 nm, vorzugsweise im Bereich von 965 nm bis 985 nm, auf. Als besonders geeignet hat sich die Lichtwellenlänge von 976 nm erwiesen. Die Laserleistung sollte bei mindestens 300 W liegen.

Die Vorrichtung zur laserbasierten Unkrautbekämpfung umfasst mindestens eine, vorzugsweise aber mehrere, der beschriebenen Unkrautbekämpfungsmodule. Die Vorrichtung kann darüber hinaus zum Beispiel Träger- oder Verfahreinheiten beinhalten, die dazu dienen, die Vorrichtung auf der Agrarfläche zu bewegen.

Das Verfahren zur laserbasierten Unkrautbekämpfung ist mit einem der vorstehend beschriebenen Unkrautbekämpfungsmodule oder mit der beschriebenen Vorrichtung zur laserbasierten Unkrautbekämpfung durchführbar bzw. wird mit diesen durchgeführt.

Das Unkrautbekämpfungsmodul bzw. die Vorrichtung mit den Unkrautbekämpfungsmodulen wird hierbei kontinuierlich oder schrittweise über die Agrarfläche bewegt, wobei das Blickfeld der Stereokamera jedes der Unkrautbekämpfungsmodule auf die Agrarfläche gerichtet ist. Während der Überfahrbewegung bewegt sich der Bilderfassungsbereich der Stereokamera kontinuierlich weiter, sodass stets neue Bereiche der Agrarfläche, in denen sich neben den Nutz- und Unkrautpflanzen auch andere feldtypische Objekte befinden, in das Blickfeld der Stereokamera gelangen. Die Verfahrrichtung wird zweckmäßigerweise so gewählt, dass die Laseroptik in Bewegungsrichtung hinter der Stereokamera liegt.

Gemäß dem erfindungsgemäßen Verfahren wird die nachfolgend beschriebene Reihenfolge von Verfahrensschritten zyklisch wiederholend während der Bewegung über die Agrarfläche durchgeführt:
Zunächst werden dreidimensionale Bilddaten aus dem momentanen Bilderfassungsbereich der Stereokamera ermittelt, d. h., in der Stereokamera werden die aus den verschiedenen Blickwickeln aufgezeichneten Bilder der Agrarfläche zu den dreidimensionalen Bilddaten verarbeitet, und an die Datenverarbeitungs- und Steuerungseinheit übermittelt.

Mittels der in der Datenverarbeitungs- und Steuerungseinheit integrierten, anhand von Unkraut- und Nutzpflanzenbilddaten trainierten künstlichen Intelligenz werden auf Basis der dreidimensionalen Bilddaten alle Unkrautpflanzen im Bilderfassungsbereich erkannt - und mithin von Nutzpflanzen und anderen Objekten im Bilderfassungsbereich unterschieden. Zu jeder erkannten Unkrautpflanze wird mindestens ein überlebenswichtiger Pflanzenbereich der erkannten Unkrautpflanze, zum Beispiel das Meristem an einer boden- bzw. wurzelnahen Verzweigungsstelle, auf Basis der dreidimensionalen Bilddaten mittels der in der Datenverarbeitungs- und Steuerungseinheit integrierten, trainierten künstlichen Intelligenz identifiziert und die räumlichen Positionsdaten des identifizierten überlebenswichtigen Pflanzenbereichs für jede der erkannten Unkrautpflanzen bestimmt. D. h., die Datenverarbeitungs- und Steuerungseinheit erkennt alle Unkrautpflanzen im Bilderfassungsbereich in einem Schritt und verfolgt diese gleichzeitig in Form der ermittelten Positionsdaten.

Die erkannten Unkrautpflanzen werden nun iterativ zur zielgerichteten Bekämpfung selektiert. Die Positionsdaten des identifizierten überlebenswichtigen Pflanzenbereichs der selektierten Unkrautpflanze werden als Zielkoordinaten an die Laseroptik zu deren Steuerung, d. h. zum Anvisieren des identifizierten überlebenswichtigen Pflanzenbereichs der selektierten Unkrautpflanze, übermittelt.

Nach dem Anvisieren wird schließlich die Laserbestrahlung bzw. der Laserbeschuss mittels der Datenverarbeitungs- und Steuerungseinheit ausgelöst, d. h., der identifizierte überlebenswichtige Pflanzenbereich der selektierten Unkrautpflanze wird mittels des Laserstrahls über die vorgegebene Bestrahlungsdauer bestrahlt. Die bevorzugte Bestrahlungsdauer liegt bei Durchführung des erfindungsgemäßen Verfahrens im Bereich von 10 ms bis 50 ms.

Die Bekämpfung aller im Bilderfassungsbereich erkannten Unkrautpflanzen erfolgt iterativ bzw. in den Schritten Selektieren der nächstens zu bekämpfenden, erkannten Unkrautpflanze, nachfolgendendes Anvisieren und abschließendes Bestrahlen, bis alle erkannten Unkrautpflanzen bestrahlt bzw. beschossen wurden. Die Selektion bzw. Auswahl der jeweils nächsten zu bekämpfenden Unkrautpflanze erfolgt anhand von Eignungskriterien, zum Beispiel anhand der räumlichen Nähe zur vorangehend bekämpften Unkrautpflanze oder anhand eines momentan geeigneten Einstrahlwinkels.

Die vorgeschlagene laserbasierte Unkrautbekämpfungstechnologie nutzt Laser höherer Leistungsdichte, nämlich Halbleiter-Diodenlaser mit einer Lichtwellenlänge im Bereich von 955 nm bis 995 nm, in Verbindung mit der gezielten Erkennung und Laserbestrahlung von überlebenswichtigen Pflanzenbereichen der Unkrautpflanzen - bei gleicher Wirkung, aber höherer Effizienz als bei kohlendioxidlaserbasierten Lasersystemen. Mit dieser eingriffsarmen Unkrautbekämpfungstechnologie wird eine technisch einfache, energieeffiziente und umweltschonende Unkrautbekämpfungstechnologie bereitgestellt.

Im ausgewählten Bereich der Lichtwellenlänge von 955 nm bis 995 nm liegt die Eindringtiefe eines Laserstrahls in Wasser bei ca. 10 mm bis 20 mm. Da Unkrautpflanzen regelmäßig zu einem wesentlichen Teil aus Wasser bestehen, entspricht diese Eindringtiefe in Wasser in etwa der Eindringtiefe in die Pflanzensubstanz. Einer der Vorteile des ausgewählten Lichtwellenlängenbereichs besteht darin, dass die Eindringtiefe des Laserstrahls im gleichen Größenbereich wie die übliche Größe des thermisch zu zersetzenden überlebenswichtigen Pflanzenbereichs liegt. Der Laserstrahl erfasst bei Bestrahlung insofern in etwa den gesamten überlebenswichtigen Pflanzenbereich der Unkrautpflanze. Bei Anwendung von Lasern mit niedrigerer Lichtwellenlänge wird regelmäßig ein zu großer Pflanzenbereich erfasst, d. h., der Laserstrahl durchdringt die Unkrautpflanze und schädigt ggf. dahinter bzw. darunter befindliche Objekte. Bei höherer Lichtwellenlänge ist dagegen die Eindringtiefe klein (zum Beispiel 0,01 - 0,02 mm bei einem Kohlendioxidlaser). Die geringe Eindringtiefe in die Pflanzensubstanz der Unkrautpflanze ist bei Anwendung von Lasern mit höherer Lichtwellenlänge daher durch eine ineffizientere längere Bestrahlungsdauer oder Mehrfachbestrahlung zu kompensieren.

Neben dieser für die Unkrautbekämpfung aufgrund der ausgewählten Lichtwellenlänge günstigen Eindringtiefe zeichnet sich der ausgewählte Lichtwellenlängenbereich zudem dadurch aus, dass ein lokales Maximum der Energieabsorption in Wasser vorliegt. Die schnellere Erwärmung des Wassers in der bestrahlten Pflanzensubstanz führt zur schnelleren Zerstörung derselben. Folglich können kürzere Bestrahlungsdauern gewählt und ein Höchstmaß an Energieeffizienz bei der Unkrautbekämpfung erreicht werden.

Mit der erfindungsgemäßen Unkrautbekämpfungstechnologie wird im Vergleich zur Anwendung von Kohlendioxidlasern beispielsweise 85-90 % weniger Energie benötigt, um die gleiche Energiemenge in die Pflanzensubstanz einzubringen.

Gemäß einer Ausgestaltung des Unkrautbekämpfungsmoduls besitzt dessen größenbestimmendes Gehäuse eine räumliche Ausdehnung, die innerhalb der geometrischen Dimensionen eines gedachten Quaders von 80 cm Länge, 80 cm Breite und 80 cm Höhe liegt. Vorzugsweise ist das Gehäuse quaderförmig ausgebildet und weist eine Größe mit einer Länge von 40 bis 60 cm Länge, 20 cm bis 25 cm Breite und 40 bis 60 cm Höhe auf. Diese Dimensionen sind vergleichbar mit handelsüblichen Tower-PCs. Das so ausgebildete Unkrautbekämpfungsmodul kann insofern leicht gehandhabt werden; es lässt sich zudem in vielen anderen Vorrichtungen einfach integrieren.

Es kann ferner vorgesehen sein, dass an der äußeren Gehäusebodenseite des Unkrautbekämpfungsmoduls ein Bodenbeleuchtungspaneel angebracht ist, welches mit Leuchtmitteln, vorzugsweise mit einer Vielzahl möglichst gleichmäßig verteilter Leuchtelemente, ausgestattet ist. Die Leuchtelemente sind vorzugsweise Leuchtdioden, die Licht im Erfassungsspektrum der Stereokamera, d. h. insbesondere Licht im sichtbaren Spektralbereich, emittieren. Um Helligkeitsmuster in den aufgenommenen Bildern zu vermeiden, sind die Leuchtmittel vorzugsweise so auszuwählen, dass sie nicht inhärent mit Frequenzen nahe der Kamera-//Verschlussfrequenz flackern. Die Abstrahlrichtung der Leuchtelemente ist bevorzugt senkrecht zur Gehäusebodenseite ausgerichtet. Vorteilhafterweise ist die Anordnung der Leuchtmittel so gewählt, dass eine weitestgehend homogene und diffuse Lichtabstrahlung von der Gehäusebodenseite ausgeht.

Am Unkrautbekämpfungsmodul kann ferner ein Schutzvorhang zur Abschirmung von Laserstrahlung angebracht sein. Der Schutzvorhang deckt hierbei den Bereich zwischen Gehäusebodenseite des Unkrautbekämpfungsmoduls und der Agrarfläche ab. Der Schutzvorhang kann höhenverstellbar, gegebenenfalls auch adaptiv höhenverstellbar, ausgebildet sein, um eine optimale Abschirmung des Bereichs zwischen Gehäusebodenseite und Agrarfläche einzustellen. In Kombination mit den an der Gehäusebodenseite angebrachten Leuchtmitteln trägt der Schutzvorhang zudem dazu bei, dass nur das von den Leuchtmitteln ausgesandte Licht bei der Bilderfassung mittels der Stereokamera genutzt wird. Störende Fremdlichteinflüsse aus der Umgebung werden hierdurch unterdrückt.

Es kann weiterhin vorgesehen sein, dass das Unkrautbekämpfungsmodul ein Wasserkühlsystem aufweist. Mit dem Wasserkühlsystem wird insbesondere die Laserdiodeneinheit gekühlt.

Die Vorrichtung zur laserbasierten Unkrautbekämpfung kann neben den Unkrautbekämpfungsmodulen ein Fahrgestell aufweisen. Das Fahrgestell kann fremdgetrieben, zum Beispiel in Form eines Anhängers für ein landwirtschaftliches Zugfahrzeug, oder auch eigengetrieben ausgebildet sein; durch integrierte Photovoltaikelemente ist Autarkie bzw. Teilautarkie möglich. Bei Anbringung mehrerer der Unkrautbekämpfungsmodule auf dem Fahrgestell werden diese vorzugsweise in einer parallelen Reihe quer zur Fahrtrichtung des Fahrgestells installiert.

Die Unkrautbekämpfungsmodule können an oder in einer Vorrichtung zur laserbasierten Unkrautbekämpfung so angeordnet sein, dass die Bilderkennungsbereiche der Stereokameras nebeneinander angeordneter Unkrautbekämpfungsmodule sich überlappen oder berühren. Vorzugsweise erfolgt diese Anordnung in Paaren aus jeweils zwei Unkrautbekämpfungsmodulen. Die Überlappung der Bilderfassungsbereiche ermöglicht es beispielsweise, dass ein und dieselbe Unkrautpflanze im Überlappungsbereich von jedem der beiden Unkrautbekämpfungsmodule erkannt wird. Dadurch kann die Unkrautpflanze von beiden Unkrautbekämpfungsmodule bekämpft werden. Je nach Ausrichtung und Positionierung der Unkrautpflanze zur jeweiligen Laseroptik, kann eine der beiden Unkrautbekämpfungsmodule die Unkrautpflanze effektiver bekämpfen, zum Beispiel wenn der Laserstrahl einer der Laseroptiken den identifizierten überlebenswichtigen Pflanzenbereich der Unkrautpflanze unter einem günstigeren Einstrahlwinkel trifft als der Laserstrahl der anderen Laseroptik. Die Anordnung der Unkrautbekämpfungsmodule mit sich berührenden Bilderfassungsbereichen ermöglicht es dagegen, eine geschlossene, möglichst breite Abdeckung der zu behandelnden Agrarfläche bei einer Überfahrt zu realisieren.

Die platzsparenden, kompakten Unkrautbekämpfungsmodule sind - im Unterschied zu Kohlendioxidlasersystemen - in breiter Reihe auf einem Fahrmodul installierbar. Die Unkrautbekämpfungstechnologie kann so in entsprechend breiten Streifen auf der Agrarfläche erfolgen. Das geringere Gewicht verhindert Boden- und Nutzpflanzenbeeinträchtigungen beim Überfahren; bei breiter Abdeckung durch eine geschlossene Reihe von Unkrautbekämpfungsmodulen sind weniger Überfahrungen der Agrarflächen erforderlich. Die geringe Masse des Unkrautbekämpfungsmoduls ermöglicht auch die Installation an Schwerlastdrohnen.

Die Vorrichtung zur laserbasierten Unkrautbekämpfung kann ferner ein Schienensystem zur Halterung laserbasierter Unkrautbekämpfungsmodule aufweisen. Das Schienensystem ermöglicht es, die Unkrautbekämpfungsmodule, angepasst an die Bepflanzung einer landwirtschaftlichen Anbaufläche bzw. Agrarfläche, auf einem Fahrgestell einer mit dem beschriebenen Fahrgestell ausgerüsteten Vorrichtung zur laserbasierten Unkrautbekämpfung, zum Beispiel auf einem landwirtschaftlich genutzten Fahrzeuganhänger, zu installieren.

Das vorgeschlagene Schienensystem der Vorrichtung zur laserbasierten Unkrautbekämpfung umfasst zwei, einen Trägerschienenstrang bzw. ein Trägerschienengleis bildende, parallel zueinander ausgerichtete Trägerschienenbahnen, die bei Installation auf einem Fahrgestell vorzugsweise quer zur Fahrtrichtung ausgerichtet sind, und ein oder mehrere durch Gleitschuhe auf den Trägerschienenbahnen geführte Modulträger. Gelagert auf den Gleitschuhen sind die Modulträger, in denen wiederum die Unkrautbekämpfungsmodule eingebaut werden bzw. sind, auf den Trägerschienenbahnen längsverschieblich installiert. Vorzugsweise nimmt jeder der Modulträger zwei parallel nebeneinander angeordnete Unkrautbekämpfungsmodule auf.

Jeder Modulträger ist vorzugsweise auf drei Gleitschuhen gelagert, um eine stabile Dreipunktlagerung zu gewährleisten. Jeder der Gleitschuhe umklammert die ihm zugeordnete Trägerschienenbahn formschlüssig, sodass ausschließlich eine Linearbewegung der Gleitschuhe entlang der Trägerschienenbahn erfolgen kann. Jede der Trägerschienenbahnen ist vorzugsweise als Schienenstrang aus zwei parallelen, miteinander verbundenen Trägerschienen gebildet. Der Gleitschuh kontaktiert die jeweilige Trägerschiene an einer Gleitfläche bzw. sitzt an dieser auf der Trägerschiene auf. Die Gleitfläche kann mit einer Gleitbeschichtung (wahlweise gleitschuh- und/oder schienenseitig) beschichtet sein (zum Beispiel mit einer Polytetrafluorethylen-Beschichtung). Die Modulträger sind lösbar an den Gleitschuhen, im Regelfall durch Schraubverbindungen, befestigt. Mindestens einer der Gleitschuhe, die einem spezifischen Modulträger zugeordnet sind, ist mit einem lösbaren Befestigungselement, zum Beispiel einer Feststellschraube, zur Arretierung des Gleitschuhs (und mithin des Modulträgers) an einer spezifischen Längsposition auf den Trägerschienenbahnen versehen.

Der Modulträger ist zur Aufnahme der Unkrautbekämpfungsmodule wannenartig ausgebildet, wobei er an der Bodenwandung Aussparungen für die Stereokamera und die Laseroptik des jeweiligen Unkrautbekämpfungsmoduls aufweist. Zum Schutz der Unkrautbekämpfungsmodule kann am Modulträger eine Schutzkappe bzw. ein Schutzdeckel, vorliegend als Protektordeckel bezeichnet, angebracht sein. Zusammen mit dem Protektordeckel bildet der auch als Protektorwanne bezeichnete Modulträger den Modulprotektor, der die Unkrautbekämpfungsmodule vor Kontamination und Beschädigung schützt.

Die Modulträger sind mit den darin befindlichen Unkrautbekämpfungsmodulen auf dem Trägerschienenstrang längsverschieblich installiert und können so nebeneinander, in vorgegebener Anzahl und mit vorgegebenem Abstand angebracht werden. Dies ermöglicht eine auf die Bepflanzung der Agrarfläche, insbesondere den Pflanzenreihenabstand, abgestimmte Anordnung der Unkrautbekämpfungsmodule.

Das Fahrgestell ist als Strebenkonstruktion ausgeführt, die ein optimales Sichtfeld unterhalb des Trägerschienenstrangs freigibt. Im Übrigen weist es eine für landwirtschaftliche Geräte übliche Ausbildung auf; vorzugsweise ist es als Fahrzeuganhänger für landwirtschaftliche Zugmaschinen ausgeführt. Die Basiskonstruktion des Fahrgestells, auf der die Trägerschienenbahnen befestigt sind, kann gegenüber den Rädern höhenverstellbar sein.

Gemäß einer Ausgestaltung sind die Unkrautbekämpfungsmodule innerhalb jedes Modulträgers an Modulschienen längsverschieblich gehaltert. Die Modulschienen sind hierzu paarweise, an zwei gegenüberliegenden Gehäusewänden des Unkrautbekämpfungsmoduls mit Modulschienenhaltern bzw. Haltelaschen befestigt, wobei die beiden, an gegenüberliegenden Wänden am Unkrautbekämpfungsmodul angebrachten Modulschienen parallel zueinander ausgerichtet sind. Die Modulschienen verlaufen zudem vorzugsweise parallel zu den Trägerschienenbahnen.

Jede Modulschiene ist in zwei zueinander beabstandeten, am Modulträger befestigten Gleitführungs- und Spannelementen längsverschieblich geführt und gehaltert. Durch Spannen der Gleitführungs- und Spannelemente wird die Lage der Modulschienen und mithin die Lage der Unkrautbekämpfungsmodule innerhalb des Modulträgers fixiert. Die Modulschienen dienen mithin als verstellbare Halterungen für das Unkrautbekämpfungsmodul innerhalb des Modulträgers.

Durch die Modulschienen kann flexibel der Abstand der beiden innerhalb eines Modulträgers befindlichen Unkrautbekämpfungsmodule eingestellt werden; hierdurch ist eine bekämpfungsoptimale Anordnung der Unkrautbekämpfungsmodule erreichbar.

Die Erfindung ist nachfolgend anhand von Ausführungsbeispielen und mit Bezug auf die schematischen Zeichnungen näher erläutert, wobei gleiche oder ähnliche Merkmale mit gleichen Bezugszeichen versehen sind; dazu zeigen
- Fig. 1:: das Verfahrensprinzip der laserbasierten Unkrautbekämpfung in Schnittdarstellung,
- Fig. 2:: ein Diagramm des Verlaufs der Energieabsorption von Laserstrahlung in Wasser in Abhängigkeit der Lichtwellenlänge,
- Fig. 3:: das Unkrautbekämpfungsmodul ohne Seitenwände in einer ersten perspektivischen Ansicht,
- Fig. 4:: das Unkrautbekämpfungsmodul ohne Seitenwände in einer zweiten perspektivischen Ansicht,
- Fig. 5:: das Unkrautbekämpfungsmodul ohne Seitenwände in einer dritten perspektivischen Ansicht,
- Fig. 6:: das Unkrautbekämpfungsmodul mit Schutzvorhang in perspektivischer Ansicht,
- Fig. 7:: zwei Unkrautbekämpfungsmodule mit überlappenden Bilderfassungsbereichen in perspektivischer Ansicht,
- Fig. 8:: zwei Unkrautbekämpfungsmodule mit aneinandergrenzenden Bilderfassungsbereichen in perspektivischer Ansicht,
- Fig. 9:: eine Ausführung der Unkrautbekämpfungsvorrichtung auf einem landwirtschaftlichen Fahrzeuganhänger in perspektivischer Ansicht,
- Fig. 10:: eine Ausführung der Unkrautbekämpfungsvorrichtung mit Schienensystem auf einem landwirtschaftlichen Fahrzeuganhänger in Seitenansicht,
- Fig. 11:: eine Ausführung der Unkrautbekämpfungsvorrichtung mit Schienensystem auf einem landwirtschaftlichen Fahrzeuganhänger in perspektivischer Ansicht von oben,
- Fig. 12:: Details der Ausführung der Unkrautbekämpfungsvorrichtung mit Schienensystem auf einem landwirtschaftlichen Fahrzeuganhänger in perspektivischer Ansicht von oben,
- Fig. 13:: Details der Ausführung der Unkrautbekämpfungsvorrichtung mit Schienensystem auf einem landwirtschaftlichen Fahrzeuganhänger in perspektivischer Ansicht von unten,
- Fig. 14:: Details der Ausführung der Unkrautbekämpfungsvorrichtung mit Schienensystem auf einem landwirtschaftlichen Fahrzeuganhänger in perspektivischer Ansicht von oben,
- Fig. 15:: Details der Ausführung der Unkrautbekämpfungsvorrichtung mit Schienensystem auf einem landwirtschaftlichen Fahrzeuganhänger in perspektivischer Ansicht von oben,
- Fig. 16:: Details des Schienensystems auf einem landwirtschaftlichen Fahrzeuganhänger in Längsschnittansicht,
- Fig. 17:: Details des Schienensystems auf einem landwirtschaftlichen Fahrzeuganhänger in perspektivischer Ansicht von oben,
- Fig. 18:: eine Ausführung der Unkrautbekämpfungsvorrichtung mit Schienensystem auf einem landwirtschaftlichen Fahrzeuganhänger in perspektivischer Ansicht,
- Fig. 19:: eine Ausführung der Unkrautbekämpfungsvorrichtung mit Schienensystem auf einem landwirtschaftlichen Fahrzeuganhänger in perspektivischer Ansicht,
- Fig. 20:: eine Ausführung der Unkrautbekämpfungsvorrichtung mit Schienensystem auf einem landwirtschaftlichen Fahrzeuganhänger in perspektivischer Ansicht, und
- Fig. 21:: eine Ausführung der Unkrautbekämpfungsvorrichtung mit Schienensystem auf einem landwirtschaftlichen Fahrzeuganhänger in perspektivischer Ansicht.

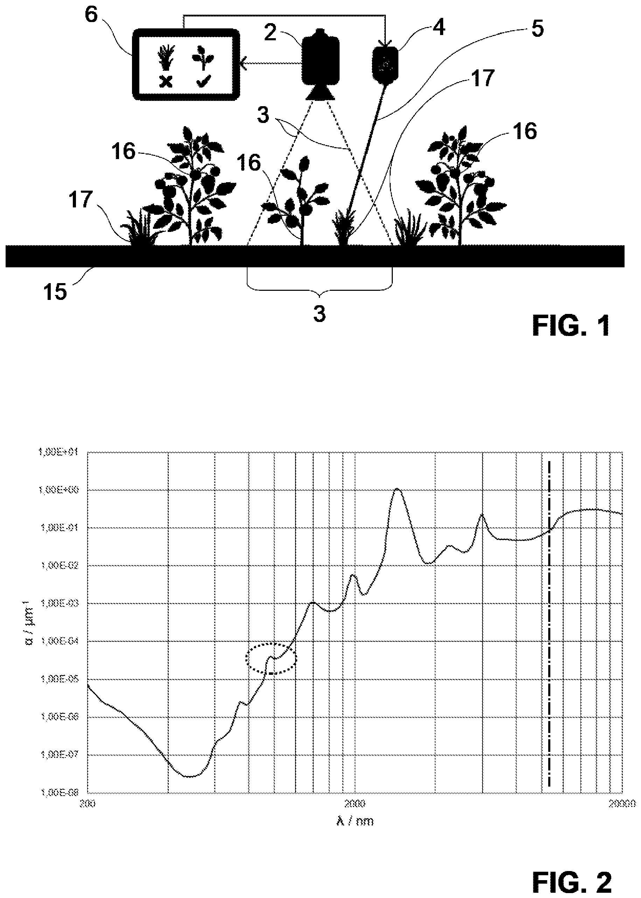

Das Verfahren zur laserbasierten Unkrautbekämpfung wird in Fig. 1 verdeutlicht: Auf einer Agrarfläche 15 befinden sich neben den Nutzpflanzen 16 die zu bekämpfenden Unkrautpflanzen 17. Zur Beseitigung der Unkrautpflanzen 17 wird das Unkrautbekämpfungsmodul 1 bzw. die Vorrichtung zur laserbasierten Unkrautbekämpfung, die in Fig. 1 durch drei ihrer Komponenten, nämlich die Stereokamera 2, die Datenverarbeitungs- und Steuerungseinheit 6 und die Lasereinheit 4, repräsentiert sind, kontinuierlich über die Agrarfläche 15 bewegt bzw. verfahren.

Im momentanen Bilderfassungsbereich 3 der Stereokamera 2 gemäß Fig. 1 befinden sich eine Nutzpflanze 16 und eine Unkrautpflanze 17. Mittels der Stereokamera 2 werden im Bilderfassungsbereich 3 Bilder aus zwei Blickwinkeln erfasst, zu dreidimensionalen Bilddaten verarbeitet und die dreidimensionalen Bilddaten an die Datenverarbeitungs- und Steuerungseinheit 6 übermittelt. Die Datenverarbeitungs- und Steuerungseinheit 6 ist eingerichtet, mittels der trainierten künstlichen Intelligenz die Nutzpflanze 16 ebenso wie die Unkrautpflanze 17 im momentanen Bilderfassungsbereich 3 zu erkennen und zu unterscheiden. Ferner ist die in der Datenverarbeitungs- und Steuerungseinheit 6 integrierte künstliche Intelligenz dazu ausgebildet, überlebenswichtige Pflanzenbereiche der Unkrautpflanze 17 zu identifizieren. Hierbei handelt es sich insbesondere um die wurzelnahen, aus Meristem bzw. Bildungsgewebe bestehenden Verzweigungsstellen der Unkrautpflanze 17. Die Datenverarbeitungs- und Steuerungseinheit 6 ist ferner eingerichtet, aus den von der Stereokamera 2 bereitgestellten dreidimensionalen Bilddaten die Position des identifizierten überlebenswichtigen Pflanzenbereichs der erkannten Unkrautpflanze 17 zu ermitteln und an die Lasereinheit 4 zu übermitteln.

Die Ablenk- und Fokussiereinheiten in der Laseroptik 4.1 der Lasereinheit 4 werden nach Abschluss der Bilddatenerfassung und -verarbeitung mittels der Datenverarbeitungs- und Steuerungseinheit 6 so angesteuert, dass der identifizierte überlebenswichtige Pflanzenbereich der Unkrautpflanze 17 anvisiert wird. Sobald die Einstellung der Lasereinheit 4, d. h. das Anvisieren, abgeschlossen ist, wird der Laserstrahl 5 für die vorgegebene Bestrahlungsdauer - von zum Beispiel 30 ms - aktiviert. Die Unkrautpflanze 17 wird hierdurch im Bereich des anvisierten überlebenswichtigen Pflanzenbereichs thermisch zersetzt; die Unkrautpflanze 17 ist dadurch biologisch nicht mehr lebensfähig. Durch die Bestrahlung bzw. den Beschuss mit dem Laserstrahl 5 wird die Unkrautpflanze 17 zudem optisch regelmäßig so verändert, dass sie durch die trainierte künstliche Intelligenz nicht mehr als Unkrautpflanze 17 erkannt wird. Sollte die Unkrautpflanze 17 nach einem eventuell unpräzisen Laserstrahlbeschuss noch immer als Unkrautpflanze 17 erkannt werden, wird erneut ein Beschuss mit dem Laserstrahl 5 ausgelöst (eventuell auch erst nach einer weiteren Überfahrt). Die Unkrautbekämpfung erfolgt auf dieser Weise bis alle Unkrautpflanzen 17 in dem während der Verfahrbewegung der Unkrautbekämpfungsvorrichtung über die Agrarfläche 15 fortschreitenden Bilderfassungsbereich 3 bekämpft sind. Durch diese verfahrensinhärente Kontrolle wird sichergestellt, dass alle lebensfähigen Unkrautpflanzen 17 auf der Agrarfläche 15 beseitigt werden.

Die Fig. 2 zeigt den Verlauf des Absorptionskoeffizienten α der Energieabsorption von Laserstrahlung in Wasser in Abhängigkeit der Lichtwellenlänge λ. Die Lichtwellenlänge λ von 955 nm bis 995 nm des mittels der Laserdiodeneinheit 4.2 erzeugten Laserstrahls 5 liegt innerhalb des im Diagramm eingekreisten Feldes. Wie ersichtlich, liegt die erfindungsgemäß ausgewählte Lichtwellenlänge λ im Bereich eines lokalen Maximums des Absorptionskoeffizienten α. D. h., von dem in der bestrahlten Pflanzensubstanz enthaltenen Wasser wird mehr Energie absorbiert als in der unmittelbaren Umgebung des ausgewählten Wellenlängenbereichs. Die damit verbundene schnellere Pflanzenwassererwärmung führt an der mit dem Laserstrahl 5 bestrahlten Position zu einer schnelleren thermischen Zersetzung der Pflanzensubstanz. Zu Vergleichszwecken ist die Lichtwellenlänge λ eines Kohlendioxidlasers als Strich-Punkt-Linie in Fig. 2 eingezeichnet.

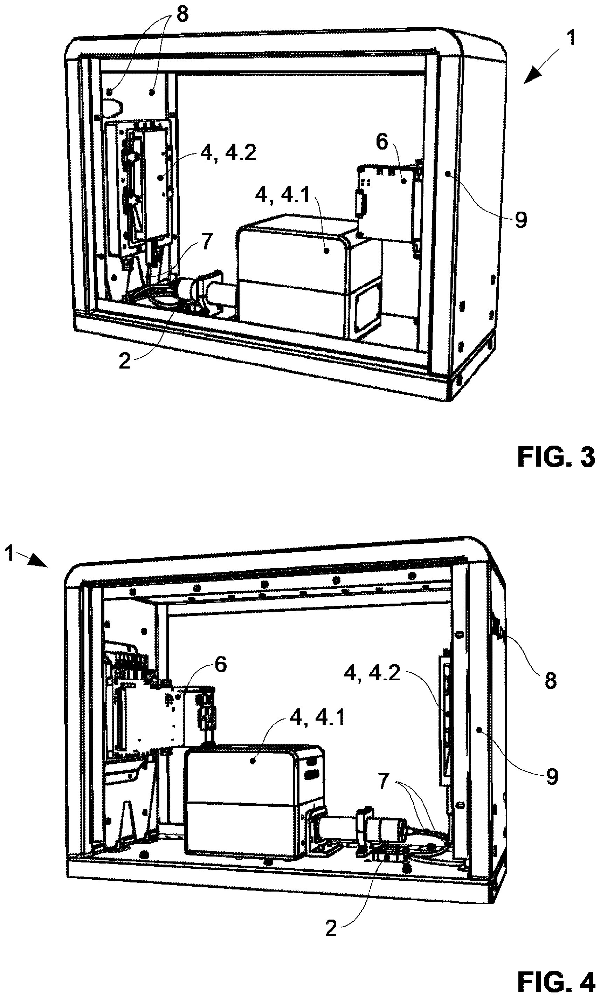

Das Unkrautbekämpfungsmodul 1 gemäß der Abbildungen in den Fig. 3 bis 5 besitzt ein quaderförmiges Gehäuse 9 mit einer Länge von 50 cm, einer Breite von 22 cm und einer Höhe von 42 - 43 cm, d. h. ein Format ähnlich dem von handelsüblichen Midi-Tower-PCs. Bei bestimmungsgemäßem Gebrauch ist das Gehäuse allseitig verkleidet; in den Darstellungen der Fig. 3 bis Fig. 5 ist das Unkrautbekämpfungsmodul 1 zur Sichtbarmachung des inneren Aufbaus ohne Seitenwände bzw. Seitenverkleidungen dargestellt.

Bodeninnenseitig im Gehäuse 9 sind die Stereokamera 2 und die Laseroptik 4.1 angebracht. Die optischen Hauptachsen der Stereokamera 2 und der Laseroptik 4.1 sind in einer Reihe und senkrecht zum Gehäuseboden ausgerichtet, d. h. bei bestimmungsgemäßem Gebrauch senkrecht auf die Agrarfläche 15 gerichtet. Der mittels der Laserdiodeneinheit 4.2 erzeugte Laserstrahl 5 wird in die Laseroptik 4.1 über den Lichtleiter 7 eingekoppelt. Die Datenverarbeitungs- und Steuerungseinheit 6 ist in bekannter Weise über Daten- bzw. Stromleitungen mit den anderen Komponenten, insbesondere der Stereokamera 2, der Laseroptik 4.1 und der Laserdiodeneinheit 4.2, verbunden. Die Laserdiodeneinheit 4.2 und gegebenenfalls weitere Komponenten werden mittels eines Wasserkühlsystems gekühlt; die Versorgung des Wasserkühlsystems erfolgt über den Wasserkühlungsanschluss 8 im Gehäuse 9.

Die Laserdiodeneinheit 4.2 besitzt eine Laserdiode, die einen Laserstrahl 5 mit einer Lichtwellenlänge λ von 976 nm erzeugt; die Laserleistung liegt bei ca. 400 W.

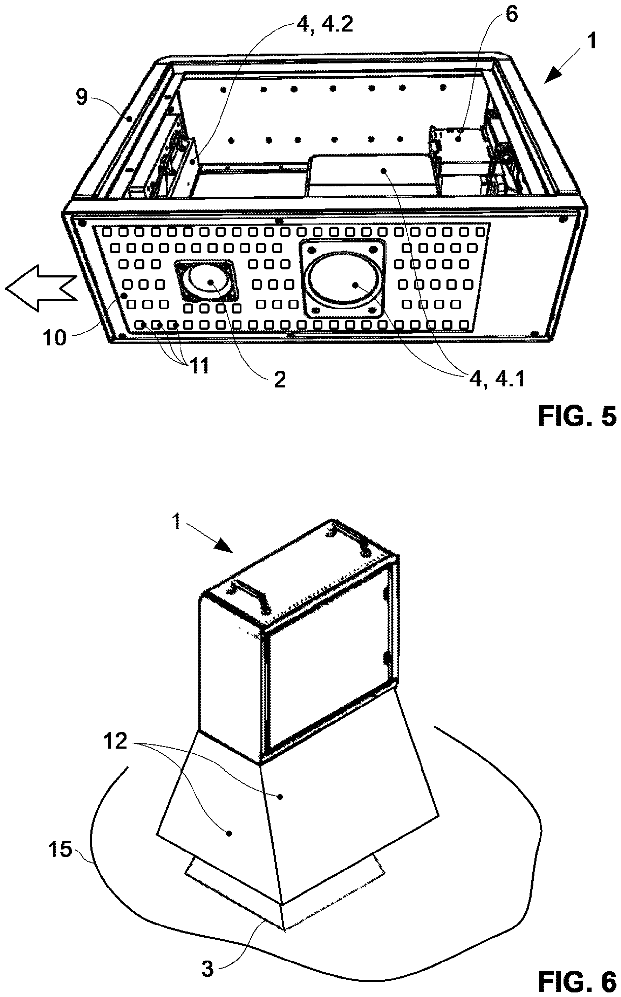

Die Darstellung der sichtbaren äußeren Gehäusebodenseite des Unkrautbekämpfungsmoduls 1 in Fig. 5 veranschaulicht die Anordnung der Stereokamera 2 und der Laseroptik 4.1. Der Pfeil gibt die Bewegungsrichtung des Unkrautbekämpfungsmoduls 1 bei bestimmungsgemäßem Gebrauch an. Am Gehäuseboden ist zudem das Bodenbeleuchtungspaneel 10 angebracht, das eine Vielzahl von Leuchtelementen 11, im Beispiel Leuchtdioden, trägt.

Die bestimmungsgemäße Aufstellung des Unkrautbekämpfungsmoduls 1 bei Durchführung der Unkrautbekämpfung veranschaulicht Fig. 6. Das Unkrautbekämpfungsmodul 1 besitzt zur leichteren Handhabung zwei Griffelemente an der Oberseite. Die Gehäusebodenseite des Unkrautbekämpfungsmoduls 1 ist horizontal ausgerichtet und mit einem Abstand von ca. 50 cm über der Agrarfläche 15 angeordnet. Der Bilderfassungsbereich 3 erstreckt sich auf der Agrarfläche 15 über eine rechteckige Fläche, d. h. die Arbeitsfläche, deren Kantenlängen jeweils im Bereich von 30 cm bis 40 cm liegen.

Um ein Austreten des Laserstrahls 5 bei Bestrahlung der Unkrautpflanzen 17 in der Arbeitsfläche zu verhindern, ist am Unkrautbekämpfungsmodul 1 der Schutzvorhang 12 angebracht, der den Bereich zwischen der Gehäusebodenseite des Unkrautbekämpfungsmoduls 1 und der Agrarfläche 15 gegen den Austritt von Laserstrahlung in die Umgebung abschirmt.

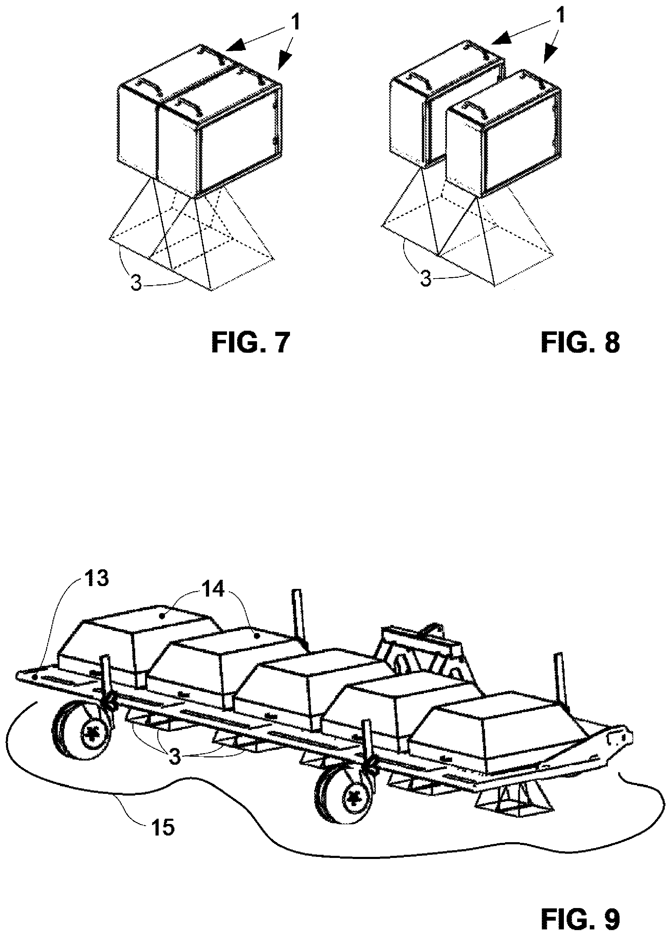

Die Fig. 7 und Fig. 8 zeigen zwei mögliche Anordnungen von Unkrautbekämpfungsmodulen 1 innerhalb einer Vorrichtung zur Unkrautbekämpfung. Die beiden Unkrautbekämpfungsmodule 1 sind jeweils mit ihren Längsseiten parallel zueinander ausgerichtet. In Fig. 7 kontaktieren sich die Unkrautbekämpfungsmodule 1, wodurch es zu einer Überlappung der beiden Bilderfassungsbereiche 3 kommt. Dies ermöglicht es beispielsweise, dass Unkrautpflanzen 17, die sich im Überlappbereich befinden, aus unterschiedlichen Winkeln erfasst und bestrahlt werden können. In Fig. 8 dagegen sind die Unkrautbekämpfungsmodule 1 beabstandet zueinander und so nebeneinander angeordnet, dass die Bilderfassungsbereiche 3 gerade aneinandergrenzen. Durch diese Anordnung ist die maximale Flächenabdeckung bei in Reihe angeordneten Unkrautbekämpfungsmodulen 1 gegeben.

Eine für den landwirtschaftlichen Einsatz als Fahrzeuganhänger ausgebildete Vorrichtung zur Unkrautbekämpfung ist in Fig. 9 dargestellt. Auf dem Fahrgestell 13 des Anhängers sind zehn paarweise in einer Reihe angeordnete (nicht sichtbare) Unkrautbekämpfungsmodule 1 installiert. Jeweils ein Paar der Unkrautbekämpfungsmodule 1 befindet sich unter einem der Modulprotektoren 14, die die Unkrautbekämpfungsmodule 1 vor den üblichen Umwelteinwirkungen aus dem landwirtschaftlichen Betrieb, wie Schmutz, Staub, Spritzwasser, etc., schützen.

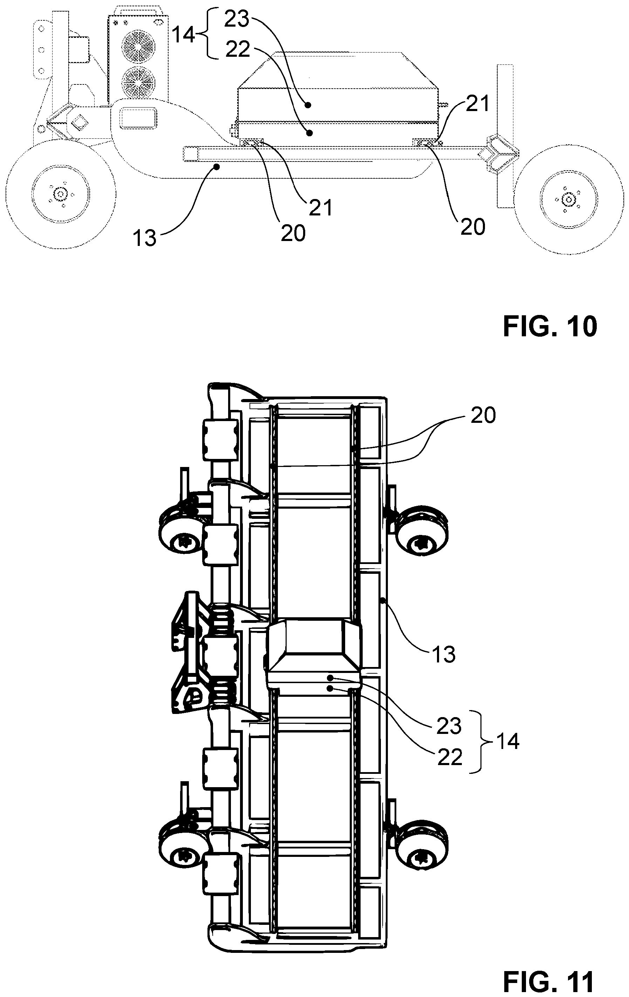

In den Fig. 10 bis 15 ist eine für den landwirtschaftlichen Einsatz als Fahrzeuganhänger ausgebildete Vorrichtung zur Unkrautbekämpfung mit Schienensystem gezeigt. Auf dem Fahrgestell 13 sind die beiden Trägerschienenbahnen 20 quer zur Fahrtrichtung des Fahrzeuganhängers befestigt.

Der Modulträger 22 bildet zusammen mit dem Protektordeckel 23 den Modulprotektor 14 zur Aufnahme und zum Schutz der Unkrautbekämpfungsmodule 1. Der Modulträger 22 ist auf den Gleitschuhen 21 befestigt, die wiederum auf den Trägerschienenbahnen 20 längsverschieblich geführt sind.

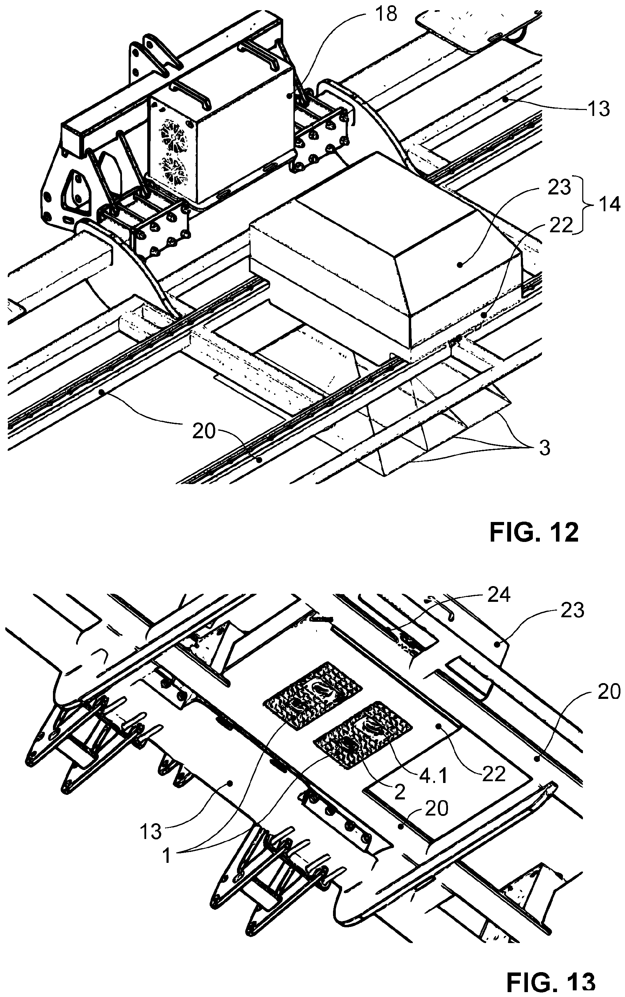

Die Detaildarstellung gemäß Fig. 12 zeigt zusätzlich das zur Kühlung der Unkrautbekämpfungsmodule 1 genutzte Kühlaggregat 18 sowie die Bilderfassungsbereiche 3 der beiden im Modulprotektor 14 installierten Unkrautbekämpfungsmodule 1.

In Fig. 13 sind die Aussparungen in der Bodenwandung des Modulträgers 22 erkennbar, die das Sichtfeld für die Stereokameras 2 und die Laseroptiken 4.1 der beiden Unkrautbekämpfungsmodule 1 freigeben.

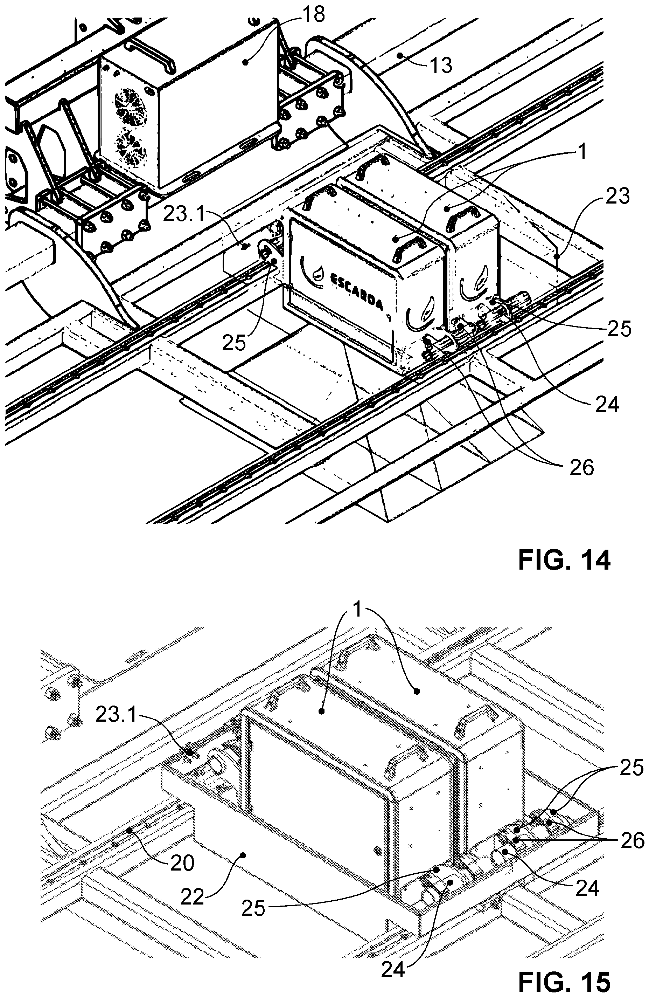

Die paarweise Anordnung der Unkrautbekämpfungsmodule 1 im Modulprotektor 14 ist in den Fig. 14 und 15 veranschaulicht. Der Modulprotektor 14, der den Modulträger 22 und den über das Deckelscharnier 23.1 klappbar am Modulträger 22 befestigten Protektordeckel 23 umfasst, ist in Fig. 14 im geschlossenen Zustand halbtransparent und in Fig. 15 im geöffneten Zustand (ohne Protektordeckel 23) dargestellt.

An jedem der beiden parallel zueinander angeordneten Unkrautbekämpfungsmodule 1 ist - jeweils einmal an der Gehäusefrontwand und einmal an der Gehäuserückwand - die als rohr- bzw. stabförmiges Element ausgebildete Modulschiene 24 mittels der Modulschienenhalter 25 befestigt. Die als Schnellspanner ausgeführten Gleitführungs- und Spannelemente 26 sind wiederum am Modulträger 22 befestigt. Jede Modulschiene 24 ist in jeweils zwei Gleitführungs- und Spannelementen 26 längsverschieblich geführt und gehaltert; durch Spannen der Schnellspanner kann die Modulschiene 24 arretiert werden. Die Modulschienen 24 der benachbarten Unkrautbekämpfungsmodule 1 sind gehäusefront- und gehäuserückseitig jeweils koaxial zueinander ausgerichtet.

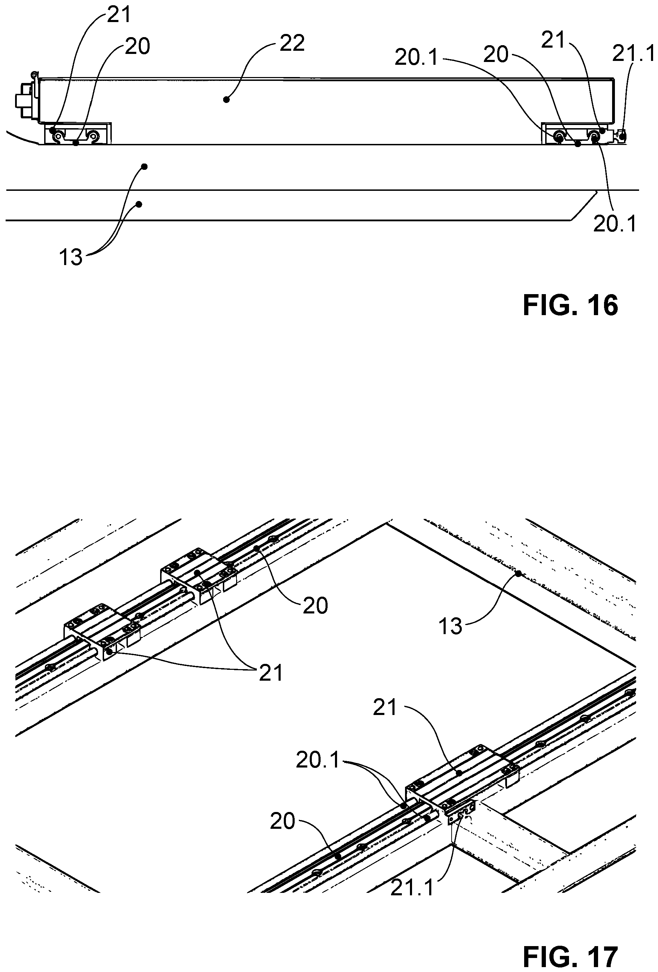

In Fig. 16, die das Schienensystem in der Längsschnittansicht quer zu den Trägerschienenbahnen 20 zeigt, ebenso wie in Fig. 17 ist die Detailausbildung der beiden Trägerschienenbahnen 20 veranschaulicht. Jede Trägerschienenbahn 20 besitzt einen Schienenstrang aus zwei parallelen, miteinander verbundenen Trägerschienen 20.1. Die beiden Trägerschienen 20.1 bilden hierbei Ausformungen der einteiligen Trägerschienenbahn 20.

Jeder der Gleitschuhe 21 ist aus Gleitstücken, die auf der Trägerschienen gleiten, und einer verbindenden Halteplatte aufgebaut. Einer der Gleitschuhe besitzt zur Arretierung das beispielhaft als Feststellschraube ausgebildete Befestigungselement 21.1. In Fig. 17 wird zudem die Dreipunktauflagerung für den Modulträger 22 veranschaulicht. An einer der beiden Trägerschienenbahnen 20 sind zwei Gleitschuhe 21 beabstandet zueinander angebracht; an der anderen der beiden Trägerschienenbahnen 20 ist der etwas größere Gleitschuh 21 - in Projektion etwa mittig zwischen den beiden anderen Gleitschuhen 21 - geführt. Letzterer Gleitschuh 21 weist zudem das Befestigungselement 21.1 auf.

In Bezug auf Details zum Schienensystem wird ferner Bezug genommen auf die deutsche Gebrauchsmusteranmeldung mit der Anmeldenummer DE 20 2023 101 842.4, dessen Inhalt hiermit in dieser Patentanmeldung aufgenommen wird.

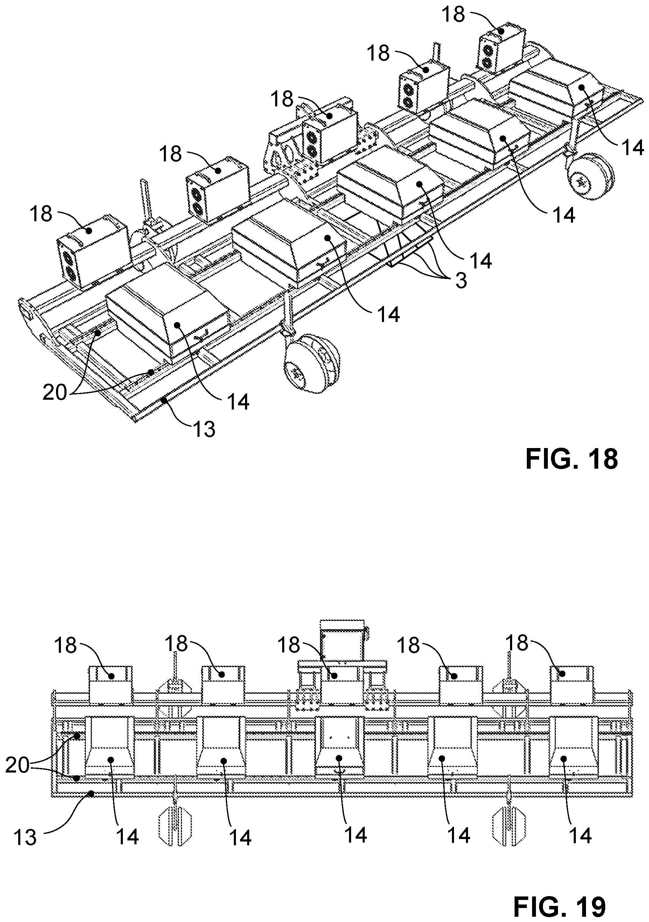

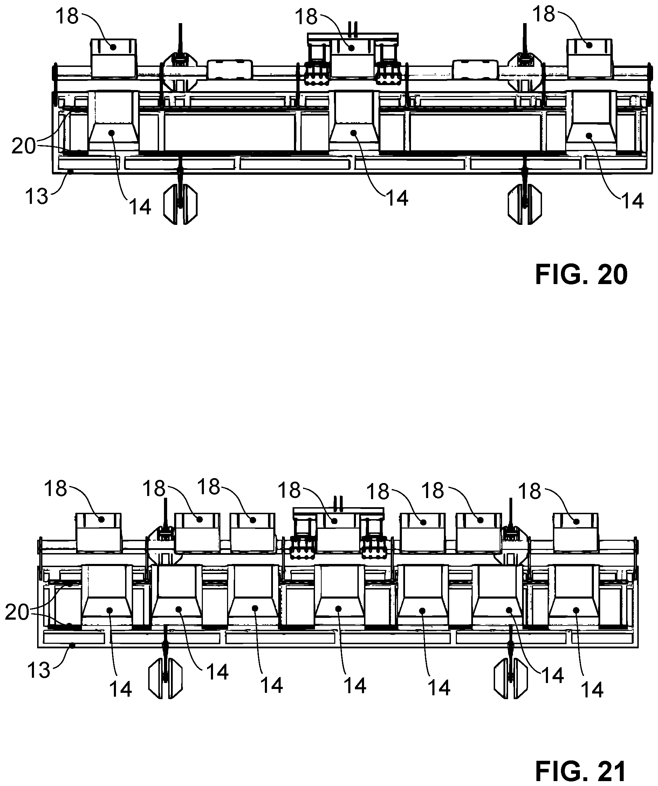

In den Fig. 18 bis 21 ist die für den landwirtschaftlichen Einsatz als Fahrzeuganhänger ausgebildete, mit dem Schienensystem versehene Vorrichtung zur Unkrautbekämpfung in unterschiedlicher Bestückung mit Modulprotektoren 14 und Kühlaggregaten 18 dargestellt. Die Modulprotektoren 14, die jeweils ein Paar der Unkrautbekämpfungsmodule 1 beinhalten, sind an unterschiedliche Pflanzenreihenabstände auf der Agrarfläche 15 angepasst. Jedem in einem Modulprotektor 14 befindlichen Paar der Unkrautbekämpfungsmodule 1 ist ein Kühlaggregat 18 zugeordnet.

### Bezugszeichenliste

- 1: Unkrautbekämpfungsmodul
- 2: Stereokamera
- 3: Bilderfassungsbereich
- 4: Lasereinheit
- 4.1 4.2: Laseroptik Laserdiodeneinheit
- 5: Laserstrahl
- 6: Datenverarbeitungs- und Steuerungseinheit
- 7: Lichtleiter
- 8: Wasserkühlungsanschluss
- 9: Gehäuse
- 10: Bodenbeleuchtungspaneel
- 11: Leuchtelement
- 12: Schutzvorhang
- 13: Fahrgestell
- 14: Modulprotektor
- 15: Agrarfläche
- 16: Nutzpflanze
- 17: Unkrautpflanze
- 18: Kühlaggregat / Wasserkühlungseinheit
- 20: Trägerschienenbahn
- 20.1: Trägerschiene
- 21: Gleitschuh
- 21.1: Befestigungselement
- 22: Modulträger
- 23: Protektordeckel
- 23.1: Deckelscharnier
- 24: Modulschiene
- 25: Modulschienenhalter
- 26: Gleitführungs- und Spannelement
- α: Absorptionskoeffizient
- λ: Lichtwellenlänge

## Patentansprüche

1. Unkrautbekämpfungsmodul (1) zur selektiven Bekämpfung von Unkrautpflanzen (17) auf einer zum landwirtschaftlichen Anbau von Nutzpflanzen (16) dienenden Agrarfläche (15), aufweisend eine Bilderkennungseinheit, eine Lasereinheit (4) und eine Datenverarbeitungs- und Steuerungseinheit (6), wobei
- die Lasereinheit (4) eine Laserdiodeneinheit (4.2) zur Erzeugung eines Laserstrahls (5) sowie eine über einen Lichtleiter (7) mit der Laserdiodeneinheit (4.2) gekoppelte Laseroptik (4.1) zur Strahlablenkung und Strahlfokussierung des Laserstrahls (5) umfasst, und
- das Unkrautbekämpfungsmodul (1) ferner ein die Bilderkennungseinheit, die Lasereinheit (4) und die Datenverarbeitungs- und Steuerungseinheit (6) aufnehmendes und umschließendes Gehäuse (9) aufweist, wobei
- die Bilderkennungseinheit eine Stereokamera (2) aufweist, die eingerichtet ist, dreidimensionale Bilddaten in einem vorgegebenen Bilderfassungsbereich (3) auf und über der Agrarfläche (15) fotografisch bereitzustellen, und
- die Datenverarbeitungs- und Steuerungseinheit (6) eingerichtet ist, anhand der mit der Stereokamera (2) bereitgestellten dreidimensionalen Bilddaten
- mittels einer in der Datenverarbeitungs- und Steuerungseinheit (6) integrierten, anhand von Unkraut- und Nutzpflanzenbilddaten trainierten künstlichen Intelligenz Unkrautpflanzen (17) zu erkennen und von Nutzpflanzen (16) zu unterscheiden,
- mittels der in der Datenverarbeitungs- und Steuerungseinheit (6) integrierten, trainierten künstlichen Intelligenz bei jeder erkannten Unkrautpflanze (17) mindestens einen überlebenswichtigen Pflanzenbereich zu identifizieren und dessen Positionsdaten zu bestimmen,
- den identifizierten überlebenswichtigen Pflanzenbereich jeder erkannten Unkrautpflanze (17) mittels der Laseroptik (4.1) durch Ansteuerung der Laseroptik (4.1) auf Basis der Positionsdaten des überlebenswichtigen Pflanzenbereich anzuvisieren, und
- nach dem Anvisieren des identifizierten überlebenswichtigen Pflanzenbereichs jeder erkannten Unkrautpflanze (17) den Laserstrahl (5) für eine vorgegebene Bestrahlungsdauer zur Bekämpfung der jeweiligen Unkrautpflanze (17) auszulösen,
**dadurch gekennzeichnet, dass**
der mittels der Laserdiodeneinheit (4.2) erzeugte Laserstrahl (5) eine Lichtwellenlänge (λ) im Bereich von 955 nm bis 995 nm aufweist.

2. Unkrautbekämpfungsmodul (1) nach Anspruch 1, **dadurch gekennzeichnet, dass** der mittels der Laserdiodeneinheit (4.2) erzeugte Laserstrahl (5) eine Leistung von mindestens 300 W aufweist.

3. Unkrautbekämpfungsmodul (1) nach Anspruch 1 oder 2, **dadurch gekennzeichnet, dass** der mittels der Laserdiodeneinheit (4.2) erzeugte Laserstrahl (5) eine Lichtwellenlänge (λ) im Bereich von 965 nm bis 985 nm aufweist.

4. Unkrautbekämpfungsmodul (1) nach einem der Ansprüche 1 bis 3, **dadurch gekennzeichnet, dass** das größenbestimmende Gehäuse (9) des Unkrautbekämpfungsmoduls (1) innerhalb der geometrischen Dimensionen eines Quaders von 80 cm Länge, 80 cm Breite und 80 cm Höhe liegt.

5. Unkrautbekämpfungsmodul (1) nach einem der Ansprüche 1 bis 4, **dadurch gekennzeichnet, dass** die Stereokamera (2) Licht im sichtbaren Spektralbereich erfasst.

6. Vorrichtung zur laserbasierten Unkrautbekämpfung, **dadurch gekennzeichnet, dass** die Vorrichtung mehrere der Unkrautbekämpfungsmodule (1) nach einem der Ansprüche 1 bis 5 aufweist.

7. Vorrichtung zur laserbasierten Unkrautbekämpfung nach Anspruch 6, **dadurch gekennzeichnet, dass** die Unkrautbekämpfungsmodule (1) auf einem selbst- oder fremdgetriebenen Fahrgestell (13) parallel nebeneinander und in einer Reihe quer zur Fahrtrichtung des Fahrgestells (13) installiert sind.

8. Vorrichtung zur laserbasierten Unkrautbekämpfung nach Anspruch 6 oder 7, **dadurch gekennzeichnet, dass** diese ein Schienensystem zur Halterung der laserbasierten Unkrautbekämpfungsmodule (1) aufweist.

9. Vorrichtung zur laserbasierten Unkrautbekämpfung nach Anspruch 8, **dadurch gekennzeichnet, dass** das Schienensystem zwei, einen Trägerschienenstrang bildende, parallel zueinander ausgerichtete Trägerschienenbahnen (20) sowie ein oder mehrere durch Gleitschuhe (21) längsverschieblich auf den Trägerschienenbahnen (21) geführte Modulträger (22) umfasst, wobei in jedem der Modulträger (22) ein oder mehrere der Unkrautbekämpfungsmodule (1) eingebaut sind.

10. Vorrichtung zur laserbasierten Unkrautbekämpfung nach einem der Ansprüche 6 bis 9, **dadurch gekennzeichnet, dass** jeweils zwei Unkrautbekämpfungsmodule (1) so nebeneinander positioniert sind, dass die Bilderkennungsbereiche (3) der Stereokameras (2) dieser beiden Unkrautbekämpfungsmodule (1) sich überlappen oder berühren.

11. Verfahren zur laserbasierten Unkrautbekämpfung, **dadurch gekennzeichnet, dass** das Verfahren mit einem Unkrautbekämpfungsmodul (1) nach einem der Ansprüche 1 bis 5 oder einer Vorrichtung nach einem der Ansprüche 6 bis 8 durchgeführt wird, wobei das Unkrautbekämpfungsmodul (1) oder die Vorrichtung mit der auf die Agrarfläche (15) gerichteten jeweiligen Stereokamera (2) des oder der Unkrautbekämpfungsmodule (1) über die Agrarfläche (15) bewegt wird, und wobei die nachfolgende Schritte fortlaufend wiederholt werden:
(a) fotografisches Aufzeichnen von Bildern der Agrarfläche (15) im momentanen Bilderfassungsbereich (3) der Stereokamera (2) und Verarbeiten der Bilder zu dreidimensionalen Bilddaten,
(b) Übermitteln der dreidimensionalen Bilddaten an die Datenverarbeitungs- und Steuerungseinheit (6),
(c) Erkennen von Unkrautpflanzen (17) in den dreidimensionalen Bilddaten mittels der in der Datenverarbeitungs- und Steuerungseinheit (6) integrierten, anhand von Unkraut- und Nutzpflanzenbilddaten trainierten künstlichen Intelligenz,
(d) Identifizieren eines überlebenswichtigen Pflanzenbereichs jeder erkannten Unkrautpflanze (17) mittels der in der Datenverarbeitungs- und Steuerungseinheit (6) integrierten, trainierten künstlichen Intelligenz,
(e) Bestimmen der Positionsdaten des identifizierten überlebenswichtigen Pflanzenbereichs jeder erkannten Unkrautpflanze (17), und
(f) Bekämpfen aller erkannten Unkrautpflanzen (17) in den zyklisch wiederholten Unterschritten:
(f1) Selektieren einer der erkannten Unkrautpflanzen (17) zur Bekämpfung,
(f2) Übermitteln der Positionsdaten des identifizierten überlebenswichtigen Pflanzenbereichs der selektierten Unkrautpflanze (17) als Zielkoordinaten an die Laseroptik (4.1),
(f3) Anvisieren des identifizierten überlebenswichtigen Pflanzenbereichs der selektierten Unkrautpflanze (17) mittels der Laseroptik (4.1), und
(f4) Bestrahlen des identifizierten überlebenswichtigen Pflanzenbereichs der selektierten Unkrautpflanze (17) mittels des Laserstrahls (5) während einer vorgegebenen Bestrahlungsdauer.

12. Verfahren zur laserbasierten Unkrautbekämpfung nach Anspruch 11, **dadurch gekennzeichnet, dass** die Bestrahlungsdauer zum Bestrahlen des überlebenswichtigen Pflanzenbereichs der selektierten Unkrautpflanze (17) im Bereich von 10 ms bis 50 ms liegt.

## Claims

1. Weed control module (1) for the selective control of weed plants (17) on an agricultural area (15) used for the agricultural cultivation of crops (16), comprising an image detection unit, a laser unit (4) and a data processing and control unit (6), wherein
- the laser unit (4) comprises a laser diode unit (4.2) for generating a laser beam (5) and a laser optics (4.1) coupled to the laser diode unit (4.2) via a light guide (7) for beam deflection and beam focusing of the laser beam (5), and
- the weed control module (1) further comprises a housing (9) accommodating and enclosing the image detection unit, the laser unit (4) and the data processing and control unit (6),
wherein
- the image detection unit has a stereo camera (2) which is configured to photographically provide three-dimensional image data in a predetermined image capture area (3) on and above the agricultural area (15), and
- the data processing and control unit (6) is configured to use the three-dimensional image data provided by the stereo camera (2)
- to detect weed plants (17) and distinguish them from crops (16) by means of an artificial intelligence integrated in the data processing and control unit (6) and trained on the basis of weed and crop image data,
- to identify at least one survival essential plant part for each weed plant (17) detected by means of the trained artificial intelligence integrated in the data processing and control unit (6) and to determine its position data,
- to target the identified survival essential plant part for each detected weed plant (17) by means of the laser optics (4.1) by controlling the laser optics (4.1) on the basis of the position data of the survival essential plant part, and
- after targeting the identified survival essential plant part for each detected weed plant (17), triggering the laser beam (5) for a predetermined irradiation time to eliminate the respective weed plant (17).
**characterized in that**
- the laser beam (5) generated by the laser diode unit (4.2) has a light wavelength (λ) in the range from 955 nm to 995 nm.

2. Weed control module (1) according to claim 1, **characterized in that** the laser beam (5) generated by means of the laser diode unit (4.2) has a power of at least 300 W.

3. Weed control module (1) according to claim 1 or 2, **characterized in that** the laser beam (5) generated by means of the laser diode unit (4.2) has a light wavelength (λ) in the range from 965 nm to 985 nm.

4. Weed control module (1) according to one of claims 1 to 3, **characterized in that** the size-determining housing (9) of the weed control module (1) lies within the geometric dimensions of a cuboid of 80 cm length, 80 cm width and 80 cm height.

5. Weed control module (1) according to one of claims 1 to 4, **characterized in that** the stereo camera (2) detects light in the visible spectral range.

6. Device for laser-based weed control, **characterized in that** the device comprises several of the weed control modules (1) according to one of claims 1 to 5.

7. Device for laser-based weed control according to claim 6, **characterized in that** the weed control modules (1) are installed on a self-driven or externally driven chassis (13) parallel to one another and in a row transverse to the direction of travel of the chassis (13).

8. Device for laser-based weed control according to claim 6 or 7, **characterized in that** it has a rail system for holding the laser-based weed control modules (1).

9. Device for laser-based weed control according to claim 8, **characterized in that** the rail system comprises two carrier rail tracks (20) which are aligned parallel to one another and form a carrier rail line, as well as one or more module carriers (22) guided by sliding shoes (21) which are longitudinally displaceable on the carrier rail tracks (20), wherein one or more of the weed control modules (1) are installed in each of the module carriers (22).

10. Device for laser-based weed control according to one of claims 6 to 9, **characterized in that** two weed control modules (1) are positioned next to each other in such a way that the image capture areas (3) of the stereo cameras (2) of these two weed control modules (1) overlap or touch.

11. A method for laser-based weed control, **characterized in that** the method is carried out with a weed control module (1) according to one of claims 1 to 5 or a device according to one of claims 6 to 8, wherein the weed control module (1) or the device with the respective stereo camera (2) of the weed control module or modules (1) directed at the agricultural area (15) is moved over the agricultural area (15), and wherein the following steps are continuously repeated:
(a) photographic recording of images of the agricultural area (15) in the current image capture area (3) of the stereo camera (2) and processing the images into three-dimensional image data,
(b) transmitting the three-dimensional image data to the data processing and control unit (6),
(c) detecting weed plants (17) in the three-dimensional image data by means of the artificial intelligence integrated in the data processing and control unit (6) and trained on the basis of weed and crop image data,
(d) identifying a survival essential plant part for each detected weed plant (17) by means of the trained artificial intelligence integrated in the data processing and control unit (6),
(e) determining the position data of the identified survival essential plant part for each detected weed plant (17), and
(f) eliminating all identified weed plants (17) in the cyclically repeated sub-steps:
(f1) selecting one of the identified weed plants (17) to be eliminated,
(f2) transmitting the position data of the identified survival essential plant part of the selected weed plant (17) as target coordinates to the laser optics (4.1),
(f3) targeting the identified survival essential plant part of the selected weed plant (17) using the laser optics (4.1),
(f4) irradiating the identified survival essential plant part of the selected weed plant (17) by means of the laser beam (5) during a predetermined irradiation time.

12. A method for laser-based weed control according to claim 11, **characterized in that** the irradiation time for irradiating the survival essential plant part of the selected weed plant (17) is in the range from 10 ms to 50 ms.

## Revendications

1. Module de lutte contre les mauvaises herbes (1) pour la lutte sélective contre les plantes adventices (17) sur des surfaces agricoles (15) servant à la culture agricole de plantes utiles (16), comportant une unité de reconnaissance d'images, une unité laser (4) et une unité de traitement de données et de commande (6),
- l'unité laser (4) comportant une unité de diode laser (4.2) pour générer un faisceau laser (5) ainsi qu'une optique laser (4.1) couplée à l'unité de diode laser (4.2) par l'intermédiaire d'un guide de lumière (7) pour dévier le faisceau et focaliser le faisceau laser (5), et
- le module de lutte contre les mauvaises herbes (1) comportant en outre un boîtier (9) recevant et enfermant l'unité de reconnaissance d'image, l'unité laser (4) et l'unité de traitement de données et de commande (6),
- l'unité de reconnaissance d'image comportant une caméra stéréo (2) qui est conçue pour fournir des données d'image tridimensionnelles dans une zone d'acquisition d'image (3) prédéterminée sur et au-dessus de la surface agricole (15), et
- l'unité de traitement de données et de commande (6) étant conçue pour reconnaître, à l'aide des données d'image tridimensionnelles fournies par la caméra stéréo (2)
- au moyen d'une intelligence artificielle intégrée dans l'unité de traitement de données et de commande (6) et entraînée à l'aide de données d'image de mauvaises herbes et de plantes utiles, des plantes adventices (17) et pour les distinguer de plantes utiles (16),
- identifier, au moyen de l'intelligence artificielle entraînée intégrée dans l'unité de traitement de données et de commande (6), pour chaque plante adventice (17) détectée, au moins une zone vitale et déterminer ses données de position,
- cibler la zone vitale identifiée de chaque plante adventice (17) détectée au moyen de l'optique laser (4.1) en commandant l'optique laser (4.1) sur la base des données de position de la zone vitale, et
- après avoir visé la zone vitale de chaque plante adventice (17) détectée, déclencher le faisceau laser (5) pendant une durée d'irradiation prédéterminée pour combattre la plante adventice (17) respective, **caractérisé en ce que**
le faisceau laser (5) généré au moyen de l'unité de diode laser (4.2) a une longueur d'onde optique (λ) comprise entre 955 nm et 995 nm.

2. Module de lutte contre les mauvaises herbes (1) selon la revendication 1, **caractérisé en ce que** le faisceau laser (5) généré au moyen de l'unité de diode laser (4.2) comporte une puissance d'au moins 300 W.

3. Module de lutte contre les mauvaises herbes (1) selon la revendication 1 ou 2, **caractérisé en ce que** le faisceau laser (5) généré au moyen de l'unité de diode laser (4.2) comporte une longueur d'onde optique (λ) comprise entre 965 nm et 985 nm.

4. Module de lutte contre les mauvaises herbes (1) selon l'une des revendications 1 à 3, **caractérisé en ce que** le boîtier (9) déterminant la taille du module de lutte contre les mauvaises herbes (1) se situe dans les dimensions géométriques d'un parallélépipède rectangle de 80 cm de longueur, 80 cm de largeur et 80 cm de hauteur.

5. Module de lutte contre les mauvaises herbes (1) selon l'une des revendications 1 à 4, **caractérisé en ce que** la caméra stéréo (2) détecte la lumière dans le domaine spectral visible.

6. Dispositif de lutte contre les mauvaises herbes au laser, **caractérisé en ce que** le dispositif comporte plusieurs des modules de lutte contre les mauvaises herbes (1) selon l'une des revendications 1 à 5.

7. Dispositif de lutte contre les mauvaises herbes au laser selon la revendication 6, **caractérisé en ce que** les modules de lutte contre les mauvaises herbes (1) sont installés sur un châssis (13) autopropulsé ou à propulsion externe, parallèlement les uns à côté des autres et en une rangée transversale à la direction de déplacement du châssis (13).

8. Dispositif de lutte contre les mauvaises herbes au laser selon la revendication 6 ou 7, **caractérisé en ce qu'**il comprend un système de rails pour supporter les modules de lutte contre les mauvaises herbes au laser (1).

9. Dispositif de lutte contre les mauvaises herbes au laser selon la revendication 8, **caractérisé en ce que** le système de rails comprend deux voies de rails de support (20) formant une ligne de rails de support et orientées parallèlement l'une à l'autre, ainsi qu'un ou plusieurs supports de modules (22) guidés par des patins de glissement (21) de manière à pouvoir se déplacer longitudinalement sur les voies de rails de support (20), un ou plusieurs des modules de lutte contre les mauvaises herbes (1) étant montés dans chacun des supports de modules (22).

10. Dispositif de lutte contre les mauvaises herbes au laser selon l'une des revendications 6 à 9, **caractérisé en ce que** deux modules de lutte contre les mauvaises herbes (1) sont respectivement positionnés l'un à côté de l'autre de telle sorte que les zones de reconnaissance d'image (3) des caméras stéréo (2) de ces deux modules de lutte contre les mauvaises herbes (1) se chevauchent ou se touchent.

11. Procédé de lutte contre les mauvaises herbes au laser, **caractérisé en ce que** le procédé est mis en œuvre avec un module de lutte contre les mauvaises herbes (1) selon l'une des revendications 1 à 5 ou un dispositif selon l'une des revendications 6 à 8, le module de lutte contre les mauvaises herbes (1) ou le dispositif étant déplacé sur la surface agricole (15) avec la caméra stéréo (2) respective du ou des modules de lutte contre les mauvaises herbes (1) orientée vers la surface agricole (15), et les étapes suivantes étant répétées en continu :
(a) enregistrement photographique d'images de la surface agricole (15) dans la zone d'acquisition d'image momentanée (3) de la caméra stéréo (2) et traitement des images en données d'image tridimensionnelles,
(b) transmission des données d'image tridimensionnelles à l'unité de traitement de données et de commande (6),
(c) reconnaissance de plantes adventices (17) dans les données d'image tridimensionnelles au moyen de l'intelligence artificielle intégrée dans l'unité de traitement de données et de commande (6) et entraînée sur la base de données d'image de plantes adventices et de plantes utiles,
(d) identification d'une zone vitale de chaque plante adventice (17) détectée au moyen de l'intelligence artificielle entraînée intégrée dans l'unité de traitement de données et de commande (6),
(e) détermination des données de position de la zone vitale identifiée de chaque plante adventice (17) détectée, et
(f) lutte contre toutes les plantes adventices (17) détectées dans les sous-étapes répétées de manière cyclique :
(f1) sélection d'une des plantes adventices (17) détectées pour la lutte,
(f2) transmission des données de position de la zone vitale de la plante adventice (17) sélectionnée comme coordonnées cibles à l'optique laser (4.1),
(f3) focalisation de la zone vitale identifiée de la plante adventice (17) sélectionnée au moyen de l'optique laser (4.1), et
(f4) irradiation de la zone vitale identifiée de la plante adventice (17) sélectionnée au moyen du faisceau laser (5) pendant une durée d'irradiation prédéterminée.

12. Procédé de lutte contre les mauvaises herbes au laser selon la revendication 11, **caractérisé en ce que** la durée d'irradiation pour irradier la zone vitale de la plante adventice (17) sélectionnée est comprise entre 10 ms et 50 ms.
